# EUROPÄISCHE PATENTSCHRIFT

(11) **EP 3 246 502 B1**
(45) Veröffentlichungstag und Bekanntmachung des Hinweises auf die Patenterteilung: **29.01.2020**
(21) Anmeldenummer: 17000857.7
(22) Anmeldetag: 19.05.2017
(51) Int. Cl.: E05F 5/08, F16F 9/22, F16F 9/48, E21B 10/40

(54) **VERFAHREN ZUM SCHLAG- ODER DREHSCHLAGBOHREN VON LÖCHERN SOWIE GLEICHZEITIGEM PROFILIEREN VON BOHRLOCHWÄNDEN IN ERD-, BODEN- ODER GESTEINSMATERIAL**
METHOD FOR PERCUSSIVE OR ROTARY PERCUSSION DRILLING OF HOLES AND SIMULTANEOUS PROFILING OF PERFORATED WALLS IN EARTH, SOIL OR ROCK MATERIAL
PROCÉDÉ DE FORAGE PAR ROTOPERCUSSION OU À PERCUSSION DANS DES TROUS ET PROFILAGE SIMULTANÉ DE PAROIS DE TROUS DE FORAGE DANS LE SOL OU LA ROCHE

(30) Priorität: 20.05.2016 AT 1182016
(43) Veröffentlichungstag der Anmeldung: 22.11.2017
(73) Patentinhaber: DSI Underground Austria GmbH, 4061 Pasching (AT)
(72) Erfinder: BÖHM, Karl, 4615 Holzhausen (AT); KARPELLUS, Walter, 6020 Innsbruck (AT)
(74) Vertreter: Cunow, Gerda

(56) Entgegenhaltungen:
- EP-A2- 1 277 887
- US-A- 3 960 222
- US-A- 4 549 615
- US-A1- 2007 023 207

## Beschreibung

Die vorliegende Erfindung bezieht sich auf ein Verfahren zum Schlag- oder Drehschlagbohren von Löchern sowie gleichzeitigem Profilieren von Bohrlochwänden in Erd-, Bodenoder Gesteinsmaterial, wobei durch eine an einem Bohrgestänge gelagerte und durch das Bohrgestänge zu einer drehenden und schlagenden Bewegung beaufschlagte Bohrkrone ein Bohrloch gebildet wird, wobei während des Bohrens gebildetes Bohrklein im Inneren eines das Bohrgestänge umgebenden Hüllrohrs aus dem Bohrloch abtransportiert wird, sowie eine Vorrichtung zum drehenden und/oder schlagenden Bohren von Löchern sowie gleichzeitigem Profilieren von Bohrlochwandungen in Erd-, Boden- oder Gesteinsmaterial mittels einer an einem Bohrgestänge gelagerten und durch das Bohrgestänge zu einer drehenden und/oder schlagenden Bewegung beaufschlagten Bohrkrone sowie einem das Bohrgestänge umgebenden Hüllrohr.

Zum Festlegen eines Verankerungselements, wie einer Ankerstange, eines Bewehrungseisens, einer Gewindestange oder dgl. in einem Bohrloch wird nach Ausbildung des Bohrlochs in dem Boden- oder Gesteinsmaterial und Setzen des entsprechenden Ankerelements dieses mit einer aushärtenden Masse, wie beispielsweise Zementmilch, Mörtel, Beton oder Zweikomponentenkunststoffen verfüllt und aushärten gelassen. Nach Aushärten der aushärtbaren Masse sollte eine derartige Verankerung zur Aufnahme von hohen Lasten geeignet sein und insbesondere sollte gewährleistet sein, dass auch bei Aufbringen von hohen Lasten ein derartiger Anker nicht gelockert wird bzw. aus dem Bohrloch ausreißt.

Der Halt einer derartigen Verankerung wird hierbei durch die aushärtende Masse zur Verfügung gestellt, welche in den Hohlraum zwischen dem Verankerungselement und der Bohrlochwandung eingebracht wurde, von dort auch in gegebenenfalls vorhandene Unebenheiten eindringt und nach einem Aushärten der Masse nicht mehr durch Zugbelastung aus dem Bohrloch herausgezogen werden kann. In Abhängigkeit von dem Gesteins bzw. dem Bodenmaterial, in welchem eine derartige Verankerung ausgebildet wird, passiert es jedoch immer wieder, dass auch nach Aushärten des sich verfestigenden Materials der Anker nicht ausreichend festsitzt und durch Aufbringen einer Zugkraft aus dem Bohrloch gezogen werden kann bzw. auch unbeabsichtigt aus diesem austritt oder ausreißt. In diesen Fällen ist der Verbund zwischen dem aushärtenden Material und der Bohrlochwandung nicht ausreichend stark, wobei dieser mangelnde Verbund nicht nur auf das falsch gewählte aushärtende Material zurückzuführen sein kann, sondern insbesondere in Abhängigkeit von dem Gesteinsmaterial bzw. Bodenmaterial, in welchem die Bohrung ausgeführt wurde, mehr oder weniger gut sein kann. So gelingt es beispielsweise bei Lehmmaterialien bzw. weichen Gesteinen, in welchen glatte Bohrlochwandungen ausgebildet werden können, häufig nicht, eine ausreichende Reibungskraft zwischen austragendem Material und Bohrlochwandung auszubilden, um das unbeabsichtigte Ziehen des Ankers jedenfalls hintanzuhalten.

Der US 4,549,615 ist ein Werkzeug zum gleichzeitigen Bohren von Löchern und Ausbilden einer Nut entnehmbar, bei welchem an einen Adapter eine Bohrkrone festgelegt ist und weiterhin an dem Adapter in einem axialen Abstand von der Bohrkrone ein Kerbwerkzeug mit gegenüber der Bohrkrone großem Durchmesser drehbar gelagert ist. Mit einer derartigen Vorrichtung soll ein Bohrloch ausgebildet werden, wobei durch die ausgebildete Kerbe ein Sprengen des Bergs im Bereich der Kerben erleichtert werden soll.

Aus der DE 37 18 158 C ist eine Vorrichtung bekannt geworden, mit welcher eine Profilierung in einem bereits gebildeten Bohrloch ausgebildet werden kann. Bei dieser Vorrichtung wird ein Profilierungselement mit einem Schaft, welcher radial abragende stiftförmige Abtragewerkzeuge als gewindefurchende Elemente aufweist, in ein bereits gebildetes Bohrloch eingetrieben und in der existierenden Bohrlochwandung eine spiralförmig verlaufende Hinterschneidung ausgebildet. Durch eine derartige ausgebildete Hinterschneidung gelingt es in der Folge nach Setzen des Ankers und Verfüllen desselben mit einem aushärtenden Material, den Anker im Inneren des Bohrlochs zu halten und ein unbeabsichtigtes Ausreißen desselben zu vermeiden.

Die vorliegende Erfindung zielt nun darauf ab, ein Verfahren und eine Vorrichtung zum Bohren von Löchern in Erd-, Boden- oder Gesteinsmaterial zur Verfügung zu stellen, mit welcher es gelingt, in einem Schaft ein Bohrloch auszubilden und eine Profilierung der Bohrlochwandung herzustellen, ohne dass gesonderte Arbeitsgänge erforderlich sind und ohne dass aufwändige Reinigungs- oder nachträgliche Profilierungsarbeiten an der Bohrlochwandung vorgenommen werden müssen.

Zur Lösung dieser Aufgabe ist das erfindungsgemäße Verfahren im Wesentlichen dadurch gekennzeichnet, dass gleichzeitig mit der Bohrkrone wenigstens ein frei um einen Kopf und/oder einen Schaft der Bohrkrone drehbar gelagertes, im Wesentlichen ringförmiges, mit einem Außenumfang der Bohrkrone im Wesentlichen übereinstimmendes ringförmiges Element in das Bohrloch eingebracht wird und dass durch wenigstens eine über den Außenumfang der Bohrkrone in Richtung zu einer Bohrlochwandung vorragende Schneide des ringförmigen Elements wenigstens eine Konturierung, insbesondere eine Rille in der Bohrlochwandung ausgebildet wird. Dadurch das gleichzeitig mit der Bohrkrone ein im Wesentlichen ringförmiges, frei um einen Schaft der Bohrkrone oder den Kopf der Bohrkrone drehbares ringförmiges Element in das Bohrloch eingebracht wird, welches ringförmige Element an seinem Außenumfang bzw. an seiner Mantelfläche in Richtung zu einer Bohrlochwandung vorragende, wenigstens eine Schneide aufweist, gelingt es einerseits mit der Bohrkrone ein Bohrloch auszubilden und andererseits durch das Einbringen des frei drehbaren, ringförmigen Elements eine Profilierung in der Bohrlochwandung auszubilden. Hierbei schneidet die an der Mantelfläche des ringförmigen Elements vorgesehene Schneide bzw. die dort vorgesehenen Bohrstifte an einer Stelle in die Bohrlochwandung ein und diese Schneide erzeugt in der Folge bei einem weiteren Eintreiben der Bohrkrone in das Innere des Bohrlochs exakt von dieser Stelle ausgehend eine Profilierung an bzw. in der Bohrlochwandung, welche sich über die gesamte Länge des ausgebildeten Bohrlochs erstreckt. Hierbei wird das Faktum ausgenutzt, dass nach Ausbilden einer ersten kleinen Ausnehmung in der Bohrlochwandung, die an der Mantelfläche des frei drehbaren, ringförmigen Elements vorgesehene Schneide bzw. die dort vorgesehenen Lösewerkzeuge immer wieder in exakt diese Ausnehmung eindringen, da dort der geringste Widerstand für die Ausbildung einer Profilierung der Bohrlochwandung existiert. Es wird somit nicht eine Vielzahl von Rillen bzw. einzelnen Löchern in der Bohrlochwandung hergestellt, sondern es wird die Schneide in exakt diese Ausnehmung, die beim ersten Eindringen gebildet wurde, eintreten und sich dort weiter der Bohrkrone folgend in das Innere des Bohrlochs vorarbeiten. Nach einem ersten Einschneiden wird daher ein weiteres Verdrehen des frei drehbaren, ringförmigen Elements nicht mehr erfolgen und eine definierte Profilierung in der Bohrlochwandung ausgebildet.

Indem das erfindungsgemäße Verfahren so weitergebildet ist, dass durch Vorsehen einer Mehrzahl von insbesondere gleichmäßig beabstandeten Schneiden an dem ringförmigen Element eine der Anzahl von Schneiden entsprechende Mehrzahl von gleichmäßig beabstandeten Rillen in der Bohrlochwandung gebildet wird, wird ein noch festerer Halt des Verankerungselements im Inneren des Bohrlochs gewährleistet und insbesondere kann ein unbeabsichtigtes Ausziehen desselben hintangehalten werden.

Indem, wie dies einer Weiterbildung des erfindungsgemäßen Verfahrens entspricht, so vorgegangen wird, dass durch Einschneiden von einer oder mehreren gekrümmten Schneiden in die Bohrlochwandung eine der Anzahl von Schneiden entsprechende Mehrzahl von insbesondere spiralförmig in der Bohrlochwandung verlaufenden Rillen ausgebildet wird, gelingt es, eine noch sicherere Verankerung von in das Bohrloch einzubringenden Ankern, Gewindestangen oder dgl. zu erreichen. Insbesondere die spiralförmig verlaufenden Rillen gewährleisten hierbei, dass ohne ein Ausbrechen der Bohrlochwandung ein Anker bzw. eine Verankerung auch aus brüchigem bzw. glattem Gestein nicht mehr gezogen werden kann.

Eine noch festere Verankerung von Ankerstangen, Gewindestangen, Bewehrungen und dgl. gelingt, wenn, wie dies einer Weiterbildung des erfindungsgemäßen Verfahrens entspricht, so vorgegangen wird, dass wenigstens zwei entgegengesetzt verlaufende, spiralförmige Rillen in der Bohrlochwandung durch Einbringen von zwei frei um den Kopf und/oder den Schaft der Bohrkrone drehbar gelagerten ringförmigen Elementen ausgebildet werden. Indem gleichzeitig mit der Ausbildung des Bohrlochs zwei entgegengesetzt verlaufende spiralförmige Rillen in der Bohrlochwandung ausgebildet werden, gelingt es sicherzustellen, dass auch ein Herausdrehen, insbesondere wenn nicht ausschließlich eine Zugkraft auf einen Anker aufgebracht wird, aus dem Bohrloch mit Sicherheit vermieden wird. Hierbei wird so vorgegangen, dass entweder ein frei um den Kopf der Bohrkrone drehbar gelagertes, ringförmiges Element und ein um den Schaft der Bohrkrone drehbar gelagertes, ringförmiges Element gemeinsam mit der Bohrkrone in das Innere des Bohrlochs eingebracht werden, welche beiden ringförmigen Elemente wiederum an ihrer Mantelfläche entsprechende Schneiden, insbesondere gekrümmte Schneiden aufweisen oder aber indem zwei hintereinander angeordnete ringförmige Elemente, die jeweils frei drehbar gelagert angeordnet sind, um den Schaft der Bohrkrone angeordnet sind. Mit beiden Ausbildungen gelingt es, das erfindungsgemäße Verfahren so zu führen, dass entgegengesetzt verlaufende Rillen in der Bohrlochwandung ausgebildet werden bzw. unterschiedlich konturierte und unterschiedlich geformte Rillen in der Bohrlochwandung ausgebildet werden. Auch Rillen mit voneinander verschiedener Tiefe können ausgebildet werden.

Um ein Verlegen von gebildeten Rillen und übermäßiges Packen von Bohrklein im Bereich des Bohrkopfs mit Sicherheit hintanzuhalten, ist das erfindungsgemäße Verfahren dahingehend weitergebildet, dass während des Bohrens gebildetes Bohrklein durch wenigstens eine, vorzugsweise mehrere gleichmäßig beabstandete Ausnehmung(en) in dem ringförmigen Element in das Innere des Hüllrohrs gefördert wird (werden). Durch das Vorsehen einer bzw. mehrerer Ausnehmungen in dem ringförmigen Element wird Bohrklein mit Sicherheit in das Innere eines das Bohrgestänge umgebenden Hüllrohrs abtransportiert und auf diese Weise vermieden, dass es zu einem Verlegen oder Blockieren der Bohreinrichtung während des Bohrens kommen kann.

Die Erfindung zielt weiterhin darauf ab, eine Vorrichtung zum drehenden und/oder schlagenden Bohren von Löchern sowie gleichzeitigem Ausbilden von Profilierungen in Erd-, Boden- oder Gesteinsmaterial zur Verfügung zu stellen, mit welcher Vorrichtung es gelingt, ein Bohrloch bzw. profiliertes Bohrloch auszubilden, in welchem nachfolgend Verankerungen, wie Anker, Gewindestangen, Bewehrungsstangen oder dgl. festgelegt werden können, die gegen ein Ausziehen bzw. unbeabsichtigtes Herausbrechen gesichert sind.

Zur Lösung dieser Aufgabe ist diese erfindungsgemäße Vorrichtung im Wesentlichen dadurch gekennzeichnet, dass wenigstens ein frei um einen Kopf oder Schaft der Bohrkrone drehbar gelagertes, im Wesentlichen ringförmiges Element vorgesehen ist, dass das ringförmige Element einen im Wesentlichen mit dem Außenumfang der Bohrkrone übereinstimmenden Außenumfang aufweist und dass das ringförmige Element an seiner einer Bohrlochwandung zugewandten Mantelfläche wenigstens eine über den Außenumfang der Bohrkrone vorragende Schneide aufweist. Durch Vorsehen von wenigstens einem frei um den Kopf oder den Schaft der Bohrkrone drehbar gelagerten, im Wesentlichen ringförmigen Element, welches ringförmige Element an seiner einer Bohrlochwandung zugewandten Mantelfläche wenigstens eine über den Außenumfang der Bohrkrone vorragende Schneide aufweist, gelingt es gleichzeitig mit der Ausbildung der Bohrkrone eine Profilierung in der Bohrlochwandung auszubilden, in welche Profilierung nach Setzen eines Ankers das einzubringende Verfestigungsmaterial, wie Zementmilch, Kunststoff-Verfestigungsmaterialien und dgl. eindringen kann und zusätzlich zu der Festlegung des Ankers eine Art Verrieglung des Befestigungsmaterials im Inneren der Bohrlochwandung zur Verfügung gestellt wird, wodurch ein Ausziehen eines Ankers nach seiner Festlegung praktisch unmöglich gemacht ist und überdies eine insgesamt kürzere Verankerungslänge erforderlich ist.

Dadurch, dass, wie dies einer Weiterbildung der Erfindung entspricht, eine Mehrzahl von insbesondere gleichmäßig beabstandeten Schneiden an der der Bohrlochwandung zugewandten Mantelfläche des ringförmigen Elements vorgesehen ist, gelingt es, mehrere Rillen gleichzeitig mit der Ausbildung des Bohrlochs in der Bohrlochwandung auszubilden, wodurch der Halt des Ankers in dem Bohrloch noch weiter verbessert werden kann und insbesondere bei glattem Gestein bzw. Gestein, welches üblicherweise wenig Halt bildet, eine sichere Verankerung eines zu setzenden Ankers, einer Bohrstange oder eines Bewehrungsstabes gewährleistet werden kann. Hierbei gelingt eine schlupffreie Lasteinleitung über den Anker aufgrund des Formschlusses desselben in dem Gestein, wodurch insgesamt das Tragverhalten des Ankers gegebenenfalls bei gleichzeitiger Verkürzung des zu setzenden Ankers gewährleistet wird.

Indem, wie dies einer Weiterbildung der Erfindung entspricht, die Vorrichtung so getroffen ist, dass die Schneide oder Schneiden gekrümmt ausgebildet sind, gelingt es, bei Eintreiben des Bohrkopfs in das Innere eines Bohrlochs eine gekrümmte Rille bzw. eine spiralförmige Rille auszubilden bzw. eine Mehrzahl von spiralförmigen Rillen auszubilden, wodurch eine noch bessere Verankerung gewährleistet wird, da insbesondere ein Anker, der in einem derartigen Bohrloch festgelegt ist, aus dem Bohrloch herausgeschraubt werden müsste, was aufgrund des hohen Reibungswiderstands zwischen dem Verfestigungsmaterial und der Bohrlochwandung praktisch unmöglich erscheint.

Indem, wie dies einer Weiterbildung der Erfindung entspricht, das ringförmige Element so ausgebildet ist, dass es wenigstens eine Ausnehmung oder Durchbrechung zum Abtransport von während des Bohrens gebildetem Bohrklein aufweist, gelingt es, das während dem Bohren entstehende bzw. gebildete Bohrklein in das Innere eines Hüllrohrs abzutransportieren, so dass ein Verlegen der Bohreinrichtung während des Bohrens hintangehalten ist.

Um die Rille in der Bohrlochwandung sicher und zuverlässig ausbilden zu können und insbesondere eine gewünschte Kontur der Rille gewährleisten zu können, ist die Erfindung dahingehend weitergebildet, dass die Schneide/Schneiden an dem ringförmigen Element von wenigstens einer Bohrleiste und/oder insbesondere einer Mehrzahl von über eine Höhe der Mantelfläche des ringförmigen Elements gleichmäßig beabstandeten Bohrstiften gebildet ist/sind. Die über die Höhe der Mantelfläche des ringförmigen Elements angeordnete Bohrleiste bzw. die gleichmäßig beanstandeten Bohrstifte können hierbei jenen Bohrstiften bzw. Bohrleisten entsprechen, welche auch der Bohrkrone selbst zum Einsatz gelangen, so dass der apparative Aufwand möglichst gering gehalten wird und überdies sichergestellt werden kann, dass die Rille über ihre gesamte Länge zuverlässig und ohne unstete Stellen ausgebildet wird.

Um insbesondere gegenläufige, spiralförmige Rillen oder Rillen unterschiedlicher Steigung ausbilden zu können, ist die erfindungsgemäße Vorrichtung im Wesentlichen dahingehend weitergebildet, dass zwei um den Kopf und/oder den Schaft der Bohrkrone drehbar gelagerte ringförmige Elemente vorgesehen sind.

Um eine räumliche Verschiebung, ein Verlieren oder ein Herausdrehen des ringförmigen Elements bzw. der ringförmigen Elemente aus dem Inneren des Bohrlochs bzw. an dem Schaft der Bohrkrone selbst mit Sicherheit hintanzuhalten, ist die Erfindung dahingehend weitergebildet, dass eine Lagerung des/der frei um den Schaft der Bohrkrone drehbaren ringförmigen Elements/Elemente von einem am Schaft der Bohrkrone festgelegtem Mitnehmer gebildet ist. Ein derartiger Mitnehmer kann hierbei ein fest mit dem Schaft der Bohrkrone verbundener Mitnehmer sein, welcher durch Aufschrauben und Verrasten, Verschweißen und dgl. mit dem Schaft der Bohrkrone verbunden ist.

Für einen unverlierbaren Halt bzw. eine unverlierbare Lagerung des frei um den Kopf der Bohrkrone drehbaren ringförmigen Elements ist die Erfindung dahingehend weitergebildet, dass an einem Außenumfang des Bohrkronenkopfs ein Auflager gebildet ist. Ein derartiges Auflager kann hierbei als eine Nut, eine geringe Verbreiterung der Bohrkrone in ihrem Außenumfangsbereich oder dgl. gebildet sein, auf bzw. in welcher das ringförmige Element aufliegt und bei einem Eintreiben in das Innere eines Bohrlochs zwangsläufig an einem Verschieben gehindert ist.

Um mit Sicherheit eine eine entsprechende Tiefe aufweisende Rille in der Bohrlochwandung auszubilden, ist die Erfindung dahingehend weitergebildet, dass an dem Bohrkopf festgelegte Bohrstifte und/oder Schneidleisten das frei um den Kopf der Bohrkrone drehbare ringförmige Element in Richtung zu einem Bohrlochinneren überragen.

Die Erfindung wird nachfolgend anhand von in der Zeichnung dargestellten Ausführungsbeispielen näher erläutert. In diesen zeigen
Fig. 1 eine Seitenansicht auf eine Vorrichtung zum Schlag- oder Drehschlagbohren von Löchern gemäß der vorliegenden Erfindung mit einer Bohrkrone sowie einem daran festgelegten frei drehbaren, ringförmigen Element,
Fig. 2 eine schematische Abbildung der in einer Bohrlochwandung mit der Vorrichtung von Fig. 1 gebildeten Rillen,
Fig. 3 eine andere Variante einer erfindungsgemäßen Vorrichtung zum Bohren von Löchern in Erd-, Boden- oder Gesteinsmaterial mit einem daran festgelegten ringförmigen Element,
Fig. 4 eine perspektivische Ansicht einer weiteren Ausbildung einer Vorrichtung zum Bohren von Löchern in Boden- oder Gesteinsmaterial mit einer Bohrkrone sowie einem auf dieser aufliegenden frei drehbaren, ringförmigen Element, und
Fig. 5 eine schematische Darstellung der Vorgangsweise, wenn nach Fertigstellung eines Bohrlochs die Bohrkrone von Fig. 4 aus dem Bohrloch gezogen wird und das ringförmige Element im Inneren des Bohrlochs verbleibt.

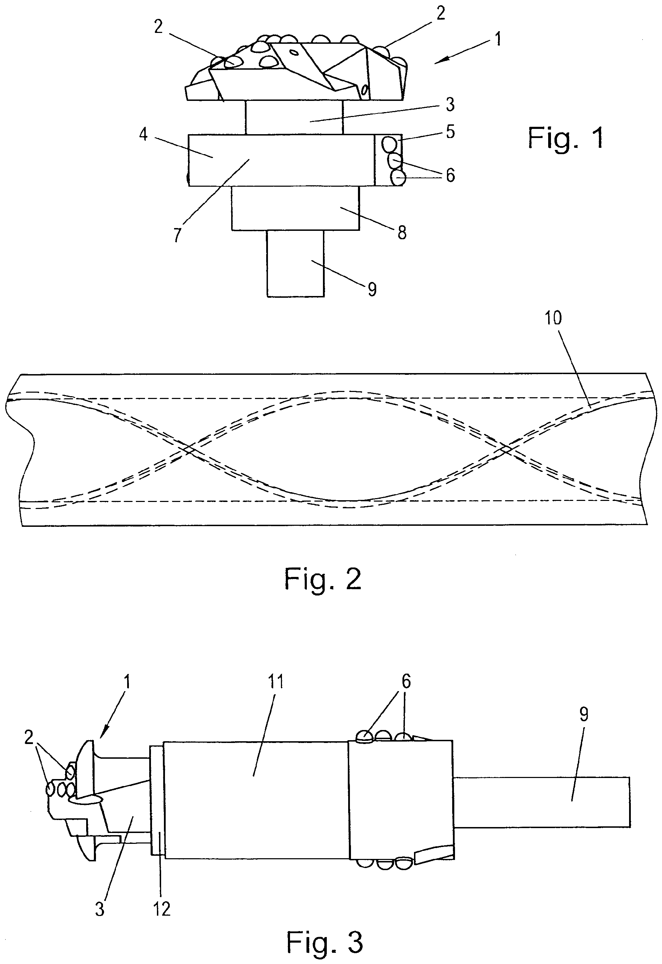

Im Einzelnen ist in Fig. 1 mit 1 allgemein eine Bohrkrone bezeichnet, welche an ihrer einer Abbaufläche zugewandten Seite mit einer Mehrzahl von Bohrstiften 2 versehen ist. Um einen Schaft 3 der Bohrkrone 1 ist frei drehbar ein ringförmiges Element 4 angeordnet, welches ringförmige Element 4 an seiner zu einer Bohrlochwandung gerichteten Mantelfläche 5 mit einer Mehrzahl von Bohrstiften bzw. Schneiden 6 versehen sind, welche Bohrstifte bzw. Schneiden 6 in der Darstellung von Fig. 1 so angeordnet sind, dass sie zu zueinander versetzt sind und einer Krümmung folgend angeordnet sind.

In der Darstellung von Fig. 1 ist das ringförmige Element 4 hierbei so ausgebildet, dass an seiner Mantelfläche 5 zwei Reihen von Bohrstiften 6 angeordnet sind und dass zwischen den zwei Reihen von Bohrstiften 6 jeweils eine große Ausnehmung 7 vorgesehen ist, durch welche während dem Bohren gebildetes Bohrklein in das Innere eines in Fig. 1 nicht dargestellten Hüllrohrs abtransportiert werden kann.

Ebenfalls an dem Bohrkronenschaft 3 ist weiterhin ein Mitnehmer 8 angeordnet, welcher Mitnehmer 8 fest und insbesondere nicht drehbar mit dem Bohrkronenschaft 3 verbunden ist. Eine derartige Verbindung kann hierbei durch Verschweißen, Verlöten, Aufschrauben oder jegliche andere eine Bewegung des Mitnehmers 8 verhindernde Verbindungsart ausgebildet sein.

Schließlich ist in Fig. 1 weiterhin schematisch ein Teil eines Bohrgestänges 9 zu entnehmen, mit welchem die Kraft zum Ausbilden eines Bohrlochs auf die Bohrkrone 1 aufgebracht wird.

In Fig. 2 ist schematisch ein Schnitt durch ein Bohrloch gezeigt, an dessen Bohrlochaußenwand Rillen 10 durch das Eindringen der Bohrstifte 6 in die Bohrlochwandung ausgebildet wurden. Die Rillen 10 sind hierbei spiralig angeordnet und die Steigung der Spirale kann im Wesentlichen mit folgender Formel ermittelt werden (1/sin Winkel) x (Bohrdurchmesser x π) = Steigung der Spirale. Die Spiralform der Rille 10 hat hierbei unabhängig von der Drehzahl der Bohrkrone 1 bzw. der Vorschubgeschwindigkeit der Bohrkrone 1 und auch der Festigkeit des Gesteins, in welchem das Bohrloch ausgebildet wird, immer die gleiche Form, da durch das frei drehbare, ringförmige Element 4, welches an seiner Mantelfläche 5 die Bohrstifte 6 angeordnet aufweist bzw. die Schneiden 6 angeordnet aufweist, an der Bohrlochwandung eine definierte Spirale 10 erzeugt wird. Hierbei sucht das ringförmige Element 4 bei seinem Einschlagen den Weg des geringsten Widerstands und kommt daher zu einer exakt definierten Drehbewegung, die nur von der Steigung bzw. dem Winkel der Bohrstifte bzw. Schneiden zur Bohrlochachse abhängt.

Je nach Anordnung der Bohrstifte 6 an der Mantelfläche 5 des ringförmigen Elements 4, insbesondere ob diese senkrecht übereinander angeordnet sind oder zueinander versetzt sind, ergibt sich eine definierte Steigung der Rille 10.

Im Fig. 3 ist eine andere Variante eines ringförmigen Elements 4 dargestellt, welches in dieser Figur mit 11 bezeichnet ist. Das ringförmige Element ist hierbei wiederum frei um einen in dieser Figur nicht ersichtlichen Schaft der Bohrkrone 2 mittels eines Mitnehmerrings 12 drehbar gelagert. Das ringförmige Element 4 ist hierbei durch den Mitnehmerring 12 unverlierbar gehalten und stellt zusätzlich zu der Ausbildung eines ringförmigen Elements 11 auch das Anfängerrohr, an welches in Richtung zu einem Bohrlochäußeren ein Hüllrohr anschließt, dar. An seinem dem Bohrlochinneren abgewandten Ende weist das ringförmige Element 11 zwei Reihen von Bohrstiften 6 auf, welche in gleicher Weise wie in Fig. 1 gezeigt angeordnet sind. Die Bohrstifte 6 bilden beim Einschlagen der Bohrkrone 1 wiederum eine Rille 10 aus, welche eine spiralige Form aufweist.

Die Bohrkrone 1 ist bei der Darstellung gemäß Fig. 3 wiederum über ein Bohrgestänge 9 beaufschlagt, jedoch anders als bei der Ausbildung von Fig. 1 ist das ringförmige Element 11 ohne gesonderte Ausnehmungen ausgebildet, da Bohrklein automatisch von der Bohrkrone 1 in das Innere des ringförmigen Elements 11 eingebracht wird und in der Folge über das an das ringförmige Element 11 anschließende Hüllrohr nach außen transportiert wird.

Es erübrigt sich festzuhalten, dass das als Anfängerrohr ausgebildete ringförmige Element 11 mit jeglichem beliebigen Hüllrohr oder Bohrgestänge verbunden sein kann. So kann es beispielsweise mit einem sogenannten Spreizanker verbunden sein, bei welchem durch einen definierten Weg eines Zurückziehens des Bohrgestänges unmittelbar ein Anker aufgespannt wird und eine Verspannung des Anfängerrohrs bzw. des darauffolgenden Hüllrohrs an einer Bohrlochwandung erzielt wird, wobei in einem derartigen Fall günstiger Weise das Hüllrohr als geschlitztes Hüllrohr ausgebildet ist. Von derartigen Funktionen der Bohrvorrichtung abgesehen, welche wie ausgeführt, beliebig gewählt werden können, ist die Funktionsweise des ringförmigen Elements 11 jedoch in gleicher Weise wie oben gezeigt, definiert und auch mit diesem ringförmigen Element 11 wird eine Konturierung bzw. Profilierung der Bohrlochwandung unmittelbar während des Bohrens erzielt.

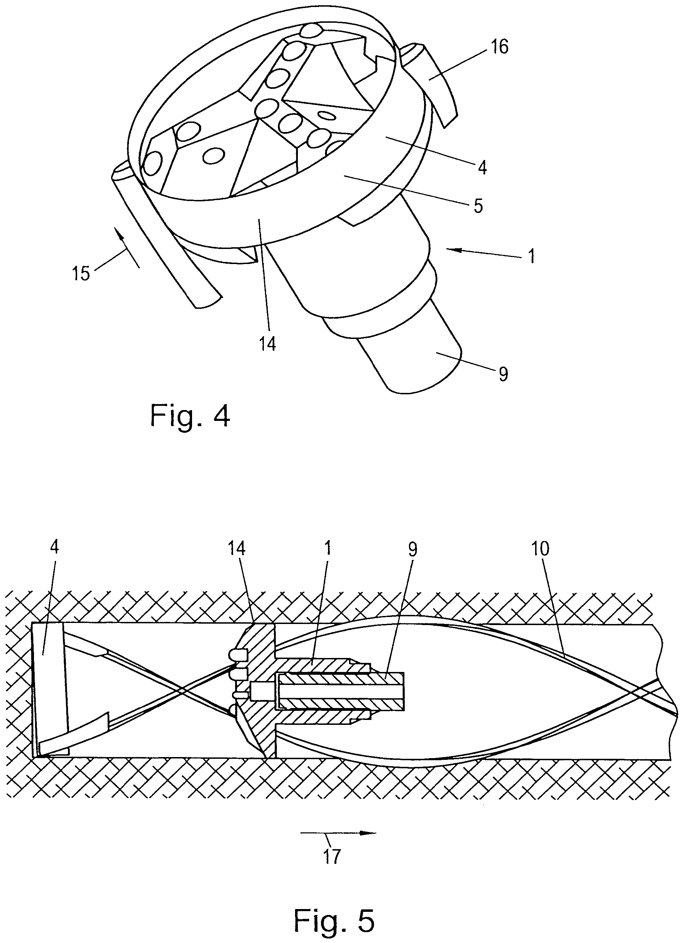

In Fig. 4 ist eine andere Variante einer Bohrkrone 1 gezeigt, welche unmittelbar mit dem Bohrgestänge 9 beaufschlagt wird. Die Bohrkrone 1 weist hierbei an ihrem Außenumfang 13 ein Auflager, insbesondere eine Rille 14 auf, in welche Rille 14 das ringförmige Element 4 eingelegt ist.

Bei einem Beaufschlagen der Bohrkrone 1 in Richtung des Pfeils 15 wird das ringförmige Element 4 fest auf der Bohrkrone 1 gehalten und ist gleichzeitig um diese frei drehbar, da irgendeine Festlegung des ringförmigen Elements 4 an der Bohrkrone 1 nicht vorgesehen ist.

Das ringförmige Element 4 weist an seinem Außenumfang, insbesondere auf seiner Mantelfläche 5 zwei Schneiden 16 auf, welche Schneiden 16 lediglich über einen Teil ihrer Länge aus Hartmaterial ausgebildet sind, da jener Teil der Schneiden 16, welcher von einem Bohrlochinneren entfernt gehalten ist, eine Lösearbeit nicht verrichten muss.

Durch das Vorsehen von gekrümmten Schneiden 16 wird wiederum beim Eintreiben des Bohrkopfs 1 in ein Bohrloch eine spiralförmige Rille 10, wie dies in Fig. 5 dargestellt ist, ausgebildet, in welche Rille 10 bei einem Festlegen eines Ankers in dem Bohrloch Verfestigungsmaterial, wie beispielsweise Zementmilch eindringt, so dass eine Verrastung bzw. ein Verhaken des Verfüllmaterials in der Bohrlochwandung sichergestellt wird. Gleichzeitig gelingt es mit einer derartigen Vorgangsweise, die Verankerungslänge zu verringern.

In Fig. 5 ist die Bohrkrone von Fig. 4 gezeigt, wobei diese nach Beendigen eines Bohrvorgangs in Richtung des Pfeils 17 aus dem Bohrloch herausgezogen wird. Beim Herausziehen der Bohrkrone 1 aus einem gebildeten Bohrloch bleibt das ringförmige Element 4 im Inneren des Bohrlochs zurück, da dieses bei der Ausbildung von Fig. 4 lediglich auf der Bohrkrone 1 aufgelegt war und somit bei einem zurückziehen derselben nicht mitgezogen wird. Diese Ausbildung ist im Gegensatz zur Ausbildung von Fig. 1, bei welcher bei einem Zurückziehen der Bohrkrone 1 auch das ringförmige Element 4 hinausgezogen werden muss.

Die Tiefe der Rillen 10 in der Bohrlochwandung hängt hierbei von dem Ausmaß des Vorragens der Bohrstifte 6 über den Außenumfang der Bohrkrone 1 ab und ist beispielsweise von der Härte des Gesteins, in welchem das Bohrloch ausgebildet werden soll, von dessen Sprödigkeit, Glätte der gebildeten Bohrlöcher und dgl. abhängig und kann von einem Fachmann entsprechend gewählt werden.

Es erübrigt sich darüber hinaus festzuhalten, dass es unerheblich ist, ob eine Schneide bzw. Bohrstifte an dem ringförmigen Element 4 festgelegt sind, was ebenfalls in Abhängigkeit von dem Gestein, in welchem die Bohrlöcher ausgebildet werden sollen, abhängt.

Schließlich ist festzuhalten, dass das gleichzeitige Bohren von Löchern und Profilieren derselben auch bei rein drehendem Bohren durchgeführt werden kann, wobei bei rein drehendem Bohren das Verfahren dahingehend unterschiedlich ist, dass das drehbar gelagerte, im Wesentlichen ringförmige, mit einem Außenumfang der Bohrkrone im Wesentlichen übereinstimmende Element dann mit einer entsprechenden Längskraft bzw. einem Druck in das Bohrloch eingedrückt werden muss, um den Beginn der Profilierung auszubilden. Sobald das Profil ausgebildet wird, kann der Druck nachgelassen werden, da dann auch im Fall von reinem drehendem Bohren das Element in das Bohrloch eingezogen wird.

Für einen Fachmann ist in diesem Zusammenhang selbstverständlich, dass ein analoges Verfahren auch in anderen Materialien als Erd-, Boden- und Gesteinsmaterial durchgeführt werden kann. So kann beispielsweise eine derartige Profilierung des Bohrlochs auch in Wänden aus Ziegel, Beton oder Holz, in Baumaterialien sowie sämtlichen beliebigen Materialien, in welchen Stifte, die eine gewisse Tragkraft aufweisen müssen, eingebracht werden sollen, ausgeführt werden.

## Patentansprüche

1. Verfahren zum Schlag- oder Drehschlagbohren von Löchern sowie gleichzeitigem Profilieren von Bohrlochwänden in Erd-, Boden- oder Gesteinsmaterial, wobei durch eine an einem Bohrgestänge (9) gelagerte und durch das Bohrgestänge (9) zu einer drehenden und schlagenden Bewegung beaufschlagte Bohrkrone (1) ein Bohrloch gebildet wird, wobei während des Bohrens gebildetes Bohrklein im Inneren eines das Bohrgestänge (9) umgebenden Hüllrohrs aus dem Bohrloch abtransportiert wird, **dadurch gekennzeichnet, dass** gleichzeitig mit der Bohrkrone (1) wenigstens ein frei um einen Kopf und/oder einen Schaft (3) der Bohrkrone (1) drehbar gelagertes, mit einem Außenumfang der Bohrkrone (1) im Wesentlichen übereinstimmendes ringförmiges Element (4, 11) in das Bohrloch eingebracht wird und dass durch wenigstens eine über den Außenumfang der Bohrkrone (1) in Richtung zu einer Bohrlochwandung vorragende Schneide (6, 16) des ringförmigen Elements (4, 11) wenigstens eine Konturierung, insbesondere eine Rille (10) in der Bohrlochwandung ausgebildet wird.

2. Verfahren nach Anspruch 1, **dadurch gekennzeichnet, dass** durch Vorsehen einer Mehrzahl von insbesondere gleichmäßig beabstandeten Schneiden (6, 16) an dem ringförmigen Element (4, 11) eine der Anzahl von Schneiden (6, 16) entsprechende Mehrzahl von gleichmäßig beabstandeten Rillen (10) in der Bohrlochwandung gebildet wird.

3. Verfahren nach Anspruch 1 oder 2, **dadurch gekennzeichnet, dass** durch Einschneiden von einer oder mehreren gekrümmten Schneiden (6, 16) in die Bohrlochwandung eine der Anzahl von Schneiden (6, 16) entsprechende Mehrzahl von insbesondere spiralförmig in der Bohrlochwandung verlaufenden Rillen (10) ausgebildet wird.

4. Verfahren nach Anspruch 1, 2 oder 3, **dadurch gekennzeichnet, dass** wenigstens zwei entgegengesetzt verlaufende, spiralförmige Rillen (10) in der Bohrlochwandung durch Einbringen von zwei frei um den Kopf und/oder den Schaft (3) der Bohrkrone (1) drehbar gelagerten ringförmigen Elementen (4, 11) ausgebildet werden.

5. Verfahren nach einem der Ansprüche 1 bis 4, **dadurch gekennzeichnet, dass** während des Bohrens gebildetes Bohrklein durch wenigstens eine, vorzugsweise mehrere gleichmäßig beabstandete Ausnehmung(en) (7) in dem ringförmigen Element (4, 11) in das Innere des Hüllrohrs gefördert wird (werden).

6. Vorrichtung zum drehenden und/oder schlagenden Bohren von Löchern sowie gleichzeitigem Profilieren von Bohrlochwandungen in Erd-, Boden- oder Gesteinsmaterial mittels einer an einem Bohrgestänge (9) gelagerten und durch das Bohrgestänge (9) zu einer drehenden und/oder schlagenden Bewegung beaufschlagten Bohrkrone (1) sowie einem das Bohrgestänge (9) umgebenden Hüllrohr, **dadurch gekennzeichnet, dass** wenigstens ein frei um einen Kopf oder Schaft (3) der Bohrkrone (1) drehbar gelagertes, im Wesentlichen ringförmiges Element (4) vorgesehen ist, dass das ringförmige Element (4, 11) einen im Wesentlichen mit dem Außenumfang der Bohrkrone (1) übereinstimmenden Außenumfang aufweist und dass das ringförmige Element (4, 11) an seiner einer Bohrlochwandung zugewandten Mantelfläche (5) wenigstens eine über den Außenumfang der Bohrkrone (1) vorragende Schneide (6, 16) aufweist.

7. Vorrichtung nach Anspruch 6, **dadurch gekennzeichnet, dass** eine Mehrzahl von insbesondere gleichmäßig beabstandeten Schneiden (6, 16) an der der Bohrlochwandung zugewandten Mantelfläche (5) des ringförmigen Elements (4, 11) vorgesehen ist.

8. Vorrichtung nach Anspruch 6 oder 7, **dadurch gekennzeichnet, dass** die Schneide oder Schneiden (6, 16) gekrümmt ausgebildet sind.

9. Vorrichtung nach einem der Ansprüche 6, 7 oder 8, **dadurch gekennzeichnet, dass** das ringförmige Element (4, 11) wenigstens eine Ausnehmung (7) oder Durchbrechung zum Abtransport von während des Bohrens gebildetem Bohrklein aufweist.

10. Vorrichtung nach einem der Ansprüche 6 bis 9, **dadurch gekennzeichnet, dass** die Schneide/Schneiden (6, 16) an dem ringförmigen Element (4, 11) von wenigstens einer Bohrleiste (16) und/oder insbesondere einer Mehrzahl von über eine Höhe der Mantelfläche (5) des ringförmigen Elements (4, 11) gleichmäßig beabstandeten Bohrstiften (6) gebildet ist/sind.

11. Vorrichtung nach einem der Ansprüche 6 bis 10, **dadurch gekennzeichnet, dass** zwei um den Kopf (1) und/oder den Schaft (3) der Bohrkrone (1) drehbar gelagerte ringförmige Elemente (4, 11) vorgesehen sind.

12. Vorrichtung nach einem der Ansprüche 6 bis 11, **dadurch gekennzeichnet, dass** eine Lagerung des/der frei um den Schaft (3) der Bohrkrone (1) drehbaren ringförmigen Elements/Elemente (4) von einem am Schaft (3) der Bohrkrone (1) festgelegtem Mitnehmer (8) gebildet ist.

13. Vorrichtung nach einem der Ansprüche 6 bis 11, **dadurch gekennzeichnet, dass** die Lagerung des frei um den Kopf der Bohrkrone (1) drehbaren ringförmigen Elements (11) durch ein am Außenumfang des Bohrkronenkopfs gebildetes Auflager gebildet ist.

14. Vorrichtung nach einem der Ansprüche 6 bis 10 sowie 13, **dadurch gekennzeichnet, dass** an dem Bohrkopf festgelegte Bohrstifte und/oder Schneidleisten (2) das frei um den Kopf der Bohrkrone (1) drehbare ringförmige Element (11) in Richtung zum Bohrlochinneren überragen.

## Claims

1. A method for the percussion or rotary percussion drilling of holes and the simultaneous profiling of borehole walls in earth, soil or rock material, wherein a borehole is formed by a drill bit (1) mounted on a drill rod assembly (9) and driven to a rotary and percussive movement by the drill rod assembly (9), wherein drill cuttings formed during drilling are removed from the borehole in the interior of a cladding tube surrounding the drill rod assembly (9), **characterized in that** simultaneously with the drill bit (1) at least one annular element (4, 11) mounted to be freely rotatable about a head and/or a shaft (3) of the drill bit (1) and substantially congruent with an outer periphery of the drill bit (1) is introduced into the borehole, and that at least one contour, in particular a groove (10), is formed in the borehole wall by at least one cutting edge (6, 16) projecting beyond the outer periphery of the drill bit (1) in the direction to a borehole wall, of the annular element (4, 11).

2. A method according to claim 1, **characterized in that** by providing a plurality of, in particular equally spaced-apart, cutting edges (6, 16) on the annular element (4, 11) a plurality corresponding to the number of cutting edges (6, 16), of equally-spaced apart grooves (10) are formed in the borehole wall.

3. A method according to claim 1 or 2, **characterized in that** by cutting one or several curved cutting edges (6, 16) into the borehole wall a plurality corresponding to the number of cutting edges (6, 16), of grooves (10) in particular spirally extending in the borehole wall are formed.

4. A method according to claim 1, 2 or 3, **characterized in that** at least two oppositely extending spiral-shaped grooves (10) are formed in the borehole wall by introducing two annular elements (4, 11) mounted to be freely rotatable about the head and/or the shaft (3) of the drill bit (1).

5. A method according to any one of claims 1 to 4, **characterized in that** drill cuttings formed during drilling are transported into the interior of the cladding tube through at least one, preferably several equally spaced-apart, recess(es) (7) in the annular element (4, 11).

6. A device for the rotary and/or percussive drilling of holes and the simultaneous profiling of borehole walls in earth, soil or rock material by a drill bit (1) mounted on a drill rod assembly (9) and driven to a rotary and/or percussive movement by the drill rod assembly (9), and a cladding tube surrounding the drill rod assembly (9), **characterized in that** at least one substantially annular element (4) mounted to be freely rotatable about a head or a shaft (3) of the drill bit (1) is provided, that the annular element (4, 11) has an outer periphery substantially congruent with the outer periphery of the drill bit (1), and that the annular element (4, 11), on its lateral surface (5) facing a borehole wall, comprises at least one cutting edge (6, 16) projecting beyond the outer periphery of the drill bit (1).

7. A device according to claim 6, **characterized in that** a plurality of, in particular equally spaced-apart, cutting edges (6, 16) are provided on the lateral surface (5) facing the borehole wall, of the annular element (4, 11).

8. A device according to claim 6 or 7, **characterized in that** the cutting edge(s) (6, 16) is/are designed to be curved.

9. A device according to any one of claims 6, 7 or 9, **characterized in that** the annular element (4, 11) comprises at least one recess (7) or passage for removing drill cuttings formed during drilling.

10. A device according to any one of claims 6 to 9, **characterized in that** the cutting edge(s) (6, 16) on the annular element (4, 11) is/are formed by at least one drill block (16) and/or, in particular, a plurality of drill pins (6) uniformly spaced-apart over a height of the lateral surface (5) of the annular element (4, 11).

11. A device according to any one of claims 6 to 10, **characterized in that** two annular elements (4, 11) mounted to be rotatable about the head (1) and/or the shaft (3) of the drill bit (1) are provided.

12. A device according to any one of claims 6 to 11, **characterized in that** a bearing means of the annular element(s) (4) freely rotatable about the shaft (3) of the drill bit (1) is formed by a tappet (8) fixed to the shaft (3) of the drill bit (1) .

13. A device according to any one of claims 6 to 11, **characterized in that** the bearing means of the annular element (11) freely rotatable about the head of the drill bit (1) is formed by a support formed on the outer periphery of the drill bit head.

14. A device according to any one of claims 6 to 10 and 13, **characterized in that** drill pins and/or cutting sticks (2) fixed to the drill head project beyond the annular element (11) freely rotatable about the head of the drill bit (1), in the direction to the borehole interior.

## Revendications

1. Procédé pour le forage par percussion ou rotopercussion de trous et simultanément le profilage de parois de trous de forage dans la terre, le sol ou la roche, dans lequel un trou de forage est formé par une couronne de forage (1) montée sur un train de tiges (9) et contrainte par le train de tiges (9) à un mouvement de rotation et de percussion, dans lequel les débris de forage formés pendant le forage à l'intérieur d'une gaine entourant le train de tiges (9) sont évacués du trou de forage, **caractérisé en ce qu'**en même temps que la couronne de forage (1), au moins un élément annulaire (4, 11) monté pour pouvoir tourner librement autour d'une tête et/ou d'un axe (3) de la couronne de forage (1) et coïncidant sensiblement avec une circonférence extérieure de ladite couronne de forage (1) est introduit dans le trou de forage, et **en ce qu'**avec au moins un tranchant (6, 16) de l'élément annulaire (4, 11) dépassant de la circonférence extérieure de la couronne de forage (1) en direction d'une paroi de trou de forage, au moins un contour, en particulier une rainure (10), est formé dans la paroi de trou de forage.

2. Procédé selon la revendication 1, **caractérisé en ce qu'**en prévoyant sur l'élément annulaire (4, 11) une pluralité de tranchants (6, 16) espacés en particulier régulièrement, on forme dans la paroi de trou de forage une pluralité, correspondant au nombre de tranchants (6, 16), de rainures (10) espacées régulièrement.

3. Procédé selon la revendication 1 ou 2, **caractérisé en ce que** par entaillage avec un ou plusieurs tranchants courbes (6, 16) dans la paroi de trou de forage sont formées une pluralité, correspondant au nombre de tranchants (6, 16), de rainures (10) s'étendant en particulier en spirale dans la paroi de trou de forage (10).

4. Procédé selon la revendication 1, 2 ou 3, **caractérisé en ce qu'**au moins deux rainures en spirale (10) s'étendant à l'opposé sont formées dans la paroi de trou de forage par l'introduction de deux éléments annulaires (4, 11) montés pour pouvoir tourner librement autour de la tête et/ou de l'axe (3) de la couronne de forage (1).

5. Procédé selon l'une des revendications 1 à 4, **caractérisé en ce que** les débris de forage formés pendant le forage sont amenés à l'intérieur de la gaine par au moins un, de préférence plusieurs creux (7) espacés régulièrement dans l'élément annulaire (4, 11).

6. Dispositif pour le forage par rotopercussion et/ou percussion de trous et simultanément le profilage de parois de trous de forage dans un matériau de terre, de sol ou de roche à l'aide d'une couronne de forage (1) montée sur un train de tiges (9) et contrainte par le train de tiges (9) à un mouvement de rotation et/ou de percussion, et d'une gaine entourant le train de tiges (9), **caractérisé en ce qu'**il est prévu au moins un élément sensiblement annulaire (4) monté pour pouvoir tourner librement autour d'une tête ou d'un axe (3) de la couronne de forage (1), **en ce que** l'élément annulaire (4, 11) présente une circonférence extérieure coïncidant sensiblement avec la circonférence extérieure de la couronne de forage (1), et **en ce que** l'élément annulaire (4, 11) présente sur sa surface latérale (5) tournée vers une paroi de trou de forage au moins un tranchant (6, 16) dépassant de la circonférence extérieure de la couronne de forage (1).

7. Dispositif selon la revendication 6, **caractérisé en ce qu'**une pluralité de tranchants (6, 16) espacés en particulier régulièrement sont prévus sur la surface latérale (5) de l'élément annulaire (4, 11) tournée vers la paroi de trou de forage.

8. Dispositif selon la revendication 6 ou 7, **caractérisé en ce que** le tranchant ou les tranchants (6, 16) ont une forme courbe.

9. Dispositif selon l'une des revendications 6, 7 ou 8, **caractérisé en ce que** l'élément annulaire (4, 11) présente au moins un creux (7) ou une percée pour l'évacuation des débris de forage formés pendant le forage.

10. Dispositif selon l'une des revendications 6 à 9, **caractérisé en ce que** le/les tranchants (6, 16) sur l'élément annulaire (4, 11) est/sont formés par au moins un rebord de forage (16) et/ou en particulier une pluralité de tiges de forage (6) espacées régulièrement sur une hauteur de la surface latérale (5) de l'élément annulaire (4, 11).

11. Dispositif selon l'une des revendications 6 à 10, **caractérisé en ce qu'**il est prévu deux éléments annulaires (4, 11) montés pour pouvoir tourner librement autour de la tête et/ou de l'axe (3) de la couronne de forage (1).

12. Dispositif selon l'une des revendications 6 à 11, **caractérisé en ce qu'**un montage de l'élément/des éléments annulaires (4) aptes à tourner librement autour de l'axe (3) de la couronne de forage (1) est formé par un organe d'entraînement (8) fixé à l'axe (3) de la couronne de forage (1).

13. Dispositif selon l'une des revendications 6 à 11, **caractérisé en ce que** le montage de l'élément annulaire (11) apte à tourner librement autour de la tête de la couronne de forage (1) est formé par un dispositif d'appui formé sur la circonférence extérieure de la tête de couronne de forage.

14. Dispositif selon l'une des revendications 6 à 10 et 13, **caractérisé en ce que** des tiges de forage et/ou des rebords de coupe (2) fixés à la tête de forage dépassent de l'élément annulaire (11) apte à tourner librement autour de la tête de la couronne de forage (1) en direction de l'intérieur du trou de forage.
